# EUROPEAN PATENT APPLICATION

(11) **EP 4 254 014 A1**
(43) Date of publication of application: **04.10.2023**
(21) Application number: 21897596.9
(22) Date of filing: 27.10.2021
(51) Int. Cl.: G01S 19/23, G01S 19/36

(54) **POSITIONING DEVICE, POSITIONING METHOD, AND POSITIONING PROGRAM**

(30) Priority: 27.11.2020 JP 2020196662
(71) Applicant: Furuno Electric Co., Ltd., Nishinomiya-City, Hyogo 662-8580 (JP)
(72) Inventor: FUJITANI, Masakazu, Nishinomiya-City, Hyogo 6628580 (JP); HOSOOKA, Takahiro, Nishinomiya-City, Hyogo 6628580 (JP)
(74) Representative: Müller Hoffmann & Partner
(86) International application number: PCT/JP2021/039687
(87) International publication number: WO 2022/113620

(57) **Abstract**

[Problem] To realize positioning computation in which an effect of propagation delay in a positioning signal between an antenna and a positioning device is suppressed. [Solution] This positioning device comprises a delay correction amount setting unit and a pseudo-distance calculation unit. The delay correction amount setting unit sets a delay correction amount for an amount of delay from an antenna to a positioning device that occurs in a positioning signal being tracked. The pseudo-distance calculation unit calculates a pseudo-distance using a tracking result and the delay correction amount.

## Description

### Technical Field

The disclosure relates to a technique of positioning computation using a positioning signal of a global navigation satellite system (GNSS).

### Related Art

Patent Document 1 discloses to generate a pilot signal by using a receiver, measure a delay time in the receiver by using the pilot signal, and use the delay time for positioning computation.

### Citation List

### Patent Literature

Patent Document 1: Japanese Laid-open No. H11-109016

### SUMMARY

### Technical Problem

However, an influence exerted on positioning computation by a propagation delay of a positioning signal between an antenna and a receiver (positioning device) cannot be suppressed.

Therefore, the purpose of this disclosure relates to realizing positioning computation in which the influence exerted by a propagation delay of a positioning signal between an antenna and a positioning device is suppressed.

### Solution to Problem

A positioning device according to the disclosure includes a delay correction amount setting unit and a pseudo-distance calculation unit. The delay correction amount setting unit sets a delay correction amount with respect to a delay amount from an antenna to a positioning device that occurs in a positioning signal being tracked. The pseudo-distance calculation unit calculates a pseudo-distance by using a tracking result and the delay correction amount.

In the configuration, with respect to the positioning signal being tracked, the delay correction amount is set in accordance with the delay amount from the antenna to the positioning device. In addition, by using the delay correction amount, an influence exerted on the pseudo-distance by a propagation delay of the positioning signal from the antenna to the positioning device is suppressed.

### Effects of Invention

According to the disclosure, positioning computation can be executed by suppressing an influence exerted by a propagation delay of a positioning signal between an antenna and a positioning device.

### BRIEF DESCRIPTION OF DRAWINGS

FIG. 1 is a functional block diagram of a computation unit of a positioning device according to a first embodiment of the disclosure.
FIG. 2 is a functional block diagram of the positioning device according to the first embodiment of the disclosure.
(A) of FIG. 3 is a graph illustrating an example of an antenna delay amount of each positioning signal, and (B) of FIG. 3 is a diagram illustrating an example of a delay correction amount setting table.
FIG. 4 is a flowchart of a positioning method according to the first embodiment of the disclosure.
FIG. 5 is a flowchart of a delay correction amount setting method.
FIG. 6 is a functional block diagram of a positioning device according to a second embodiment of the disclosure.
(A) of FIG. 7 is a graph illustrating an example of an antenna delay amount of each positioning signal and each temperature, and (B) of FIG. 7 is a diagram illustrating an example of a delay correction amount setting table.
FIG. 8 is a flowchart of a positioning method according to the second embodiment of the disclosure.
FIG. 9 is a flowchart of a delay correction amount setting method.

### DESCRIPTION OF EMBODIMENTS

### (First embodiment)

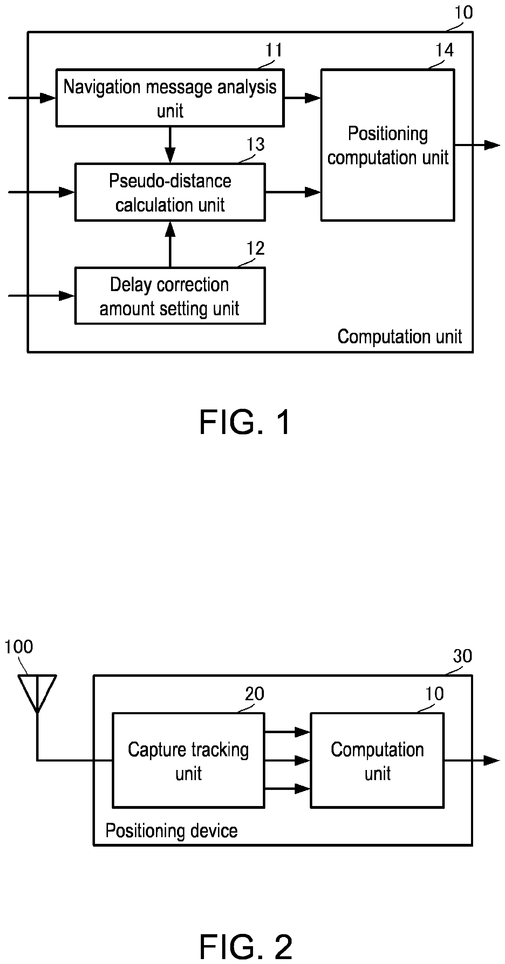

In the following, a positioning technique according to the first embodiment of the disclosure is described with reference to the drawings. FIG. 1 is a functional block diagram of a computation unit of a positioning device according to the first embodiment of the disclosure. FIG. 2 is a functional block diagram of the positioning device according to the first embodiment of the disclosure.

### (Configuration of a positioning device 30)

As shown in FIG. 2, the positioning device 30 includes a computation unit 10 and a capture tracking unit 20. An antenna 100 is connected to the capture tracking unit 20.

The antenna 100 receives a positioning signal from a positioning satellite of a global navigation satellite system (GNSS). For example, the antenna 100 receives a positioning satellite of the Global Positioning System (GPS), GLONASS (a global navigation satellite system). The antenna 100 may also receive a positioning signal from other GNSS systems, such as a quasi-zenith satellite.

The antenna 100 outputs the received positioning signal to the capture tracking unit 20. While not shown in the drawings, an RF amplifier, for example, is connected to a later stage of the antenna 100. The RF amplifier amplifies and outputs the positioning signal to the capture tracking unit 20.

### (Configuration and processing of the capture tracking unit 20)

The capture tracking unit 20, for example, is formed by various electronic circuits and a control IC built in with a program executing a capture tracking process. However, the physical configuration of the capture tracking unit 20 is not limited thereto.

The capture tracking unit 20 is formed by a down converter and multiple correlation processing units. The positioning signal is input to the down converter. The down converter down-converts and outputs the positioning signal to the correlation processing units.

Each of the correlation processing units generates a carrier wave signal and a replica code of the positioning satellite (positioning signal) of a capture tracking target. Each of the correlation processing units captures and tracks the positioning signal of the target by using the carrier wave signal and the replica code that are set. The correlation processing units output results of tracking with respect to the positioning signals that are successfully captured and tracked to the computation unit 10. The result of tracking includes, for example, a baseband signal, a code phase difference, and a carrier wave phase difference of the positioning signal restored by correlation processing, and tracking information (e.g., a satellite number, etc.) representing the successfully tracked positioning satellite.

For example, each of the correlation processing units whose capture tracking targets are GPS positioning signals (e.g., L1 waves) generates a GPS carrier wave signal and a replica code set for each GPS positioning satellite. The correlation processing units whose capture tracking targets are GPS positioning signals respectively perform capture tracking processing. When succeeding in capture tracking, the correlation processing units whose capture tracking targets are GPS positioning signals output, to the computation unit 10, the baseband signals of the GPS positioning signals, the code phase differences with respect to the code set for each GPS positioning satellite, the GPS carrier wave phase differences, and the GPS positioning satellites (e.g., satellite numbers) that are successfully tracked. In GPS, since the frequencies of all of the positioning signals from the positioning satellites are the same, it may also suffice to learn only that the positioning satellite that is successfully tracked is a GPS positioning satellite.

In addition, each of the correlation processing units whose capture tracking targets are GLONASS positioning signals generates a carrier wave signal of each GLONASS positioning satellite (each channel) and a replica code set for each GLONASS positioning satellite. The correlation processing units whose capture tracking targets are GLONASS positioning signals respectively perform capture tracking processing. When succeeding in capture tracking, the correlation processing units whose capture tracking targets are GLONASS positioning signals output, to the computation unit 10, the baseband signals of the GLONASS positioning signals, the code phase differences with respect to the code set for each GLONASS positioning satellite, the carrier wave phase differences with respect to the carrier wave frequency set for each GLONASS positioning satellite, and the GLONASS positioning satellites (e.g., satellite numbers) that are successfully tracked. In GLONASS, the positioning signals (positioning satellites) differ from one another. Therefore, information able to identify a positioning signal (positioning satellite) is required.

Regarding positioning signals other than GNSS, the capture tracking unit 20 can perform processing same as the processing with respect to GPS (L1) or GLONASS and can output the tracking results to the computation unit 10.

### (Configuration and processing of the computation unit 10)

As shown in FIG. 1, the computation unit 10 includes a navigation message analysis unit 11, a delay correction amount setting unit 12, a pseudo-distance calculation unit 13, and a positioning computation unit 14. The computation unit 10 is realized by a storage medium storing a program (positioning program) of a positioning method and an arithmetic processing device, such as a CPU, that executes the positioning program. It is noted that the physical configuration of the computation unit 10 is not limited to the above.

The baseband signal of the positioning signal is input from the capture tracking unit 20 to the navigation message analysis unit 11. The navigation message analysis unit 11 analyzes a navigation message from the baseband signal. The navigation message analysis unit 11 acquires a clock error of each positioning satellite, precise track information of each positioning satellite, etc., from the navigation message. The navigation message analysis unit 11 outputs the clock error to the pseudo-distance calculation unit 13. The navigation message analysis unit 11 outputs the precise track information, that is, the position of the positioning satellite, to the positioning computation unit 14.

The tracking information is input from the capture tracking unit 20 to the delay correction amount setting unit 12. The delay correction amount setting unit 12 sets a delay correction amount of each positioning signal (positioning satellite) being tracked from the tracking information. The delay correction amount is for correcting a propagation delay amount (antenna delay amount) of a positioning signal from the antenna 100 to the capture tracking unit 20. The delay correction amount setting unit 12 outputs the delay correction amount of each positioning signal to the pseudo-distance calculation unit 13.

The code phase difference is input from the capture tracking unit 20 to the pseudo-distance calculation unit 13, and the clock error is input from the navigation message analysis unit 11 to the pseudo-distance calculation unit 13. In addition, the delay correction amount of each positioning satellite is input from the delay correction amount setting unit 12 to the pseudo-distance calculation unit 13.

The pseudo-distance calculation unit 13 calculates the pseudo-distance of each positioning satellite by using the code phase difference, the clock error, and the delay correction amount. Except for using the delay correction amount as a known value, the method for calculating the pseudo-distance is a conventional method. Therefore, the detailed description about the method for calculating the pseudo-distance is omitted. The pseudo-distance calculation unit 13 outputs the pseudo-distance of each positioning satellite to the positioning computation unit 14.

The positioning computation unit 14 performs positioning computation by using the pseudo-distance of each positioning satellite and the satellite position of the positioning satellite. Positioning computation refers to, for example, calculation of the position of the positioning device 30 (the position of the antenna 100, to be more precise), the speed of the positioning device 30, a precise reference time, etc. The positioning computation unit 14 may calculate all of the above, and may also calculate at least one of the above.

### (First setting method of the delay correction amount)

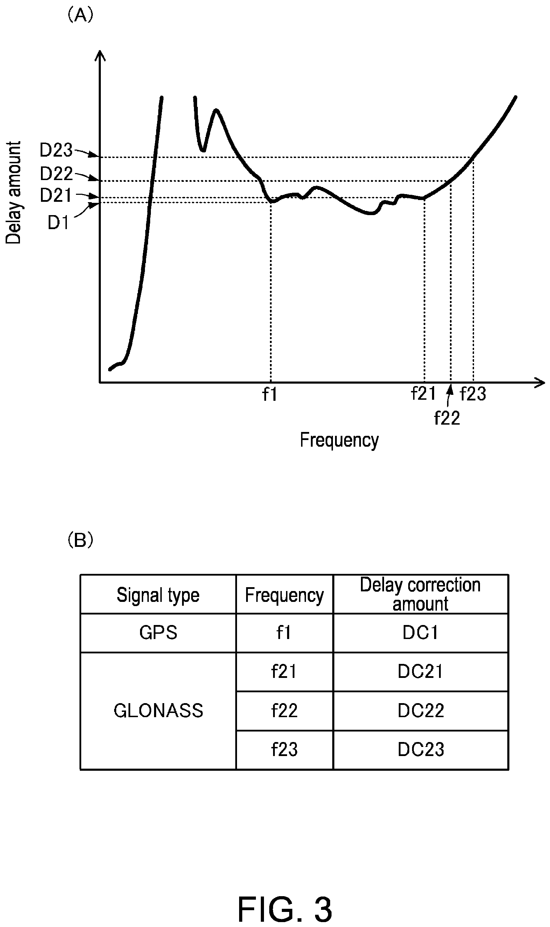

(A) of FIG. 3 is a graph illustrating an example of an antenna delay amount of each positioning signal, and (B) of FIG. 3 is a diagram illustrating an example of a delay correction amount setting table.

As shown in (A) of FIG. 3, the antenna delay amount of the positioning signal has a frequency property. In other words, the antenna delay amount of the positioning signal differs as the frequency of the positioning signal differs. For example, the frequency of a GPS positioning signal and the frequency of a GLONASS positioning signal are different. Therefore, the antenna delay amount of the GPS positioning signal and the antenna delay amount of the GLONASS positioning signal are different. In addition, in GLONASS, the frequency of the positioning signal is different for each positioning satellite (channel). Therefore, in GLONASS, the antenna delay amount differs for each positioning satellite (channel).

As a specific example, in the case shown in (A) of FIG. 3, regarding the GPS positioning signal (e.g., L1 wave), the antenna delay amount for a frequency f1 is an antenna delay amount D1. Regarding the positioning signal (e.g., L1 wave) of a channel A of GLONASS, the antenna delay amount for a frequency f21 is an antenna delay amount D21. Regarding the positioning signal (e.g., L1 wave) of a channel B of GLONASS, the antenna delay amount for a frequency f22 is an antenna delay amount D22. Regarding the positioning signal (e.g., L1 wave) of a channel C of GLONASS, the antenna delay amount for a frequency f23 is an antenna delay amount D23.

The frequency f1, the frequency f21, the frequency f22, and the frequency f23 are different. Therefore, the antenna delay amount D1, the antenna delay amount D21, the antenna delay amount D22, and the antenna delay amount D23 with respect to these frequencies are not necessarily the same.

The delay correction amount setting unit 12 sets a delay correction amount DC1, a delay correction amount DC21, a delay correction amount DC22, and a delay correction amount DC23 so as to cancel the calculation errors of the pseudo-distances due to the antenna delay amount D1, the antenna delay amount D21, the antenna delay amount D22, and the antenna delay amount D23, respectively. For example, the delay correction amount setting unit 12 sets the delay correction amount DC1 for the positioning signal of the frequency f1 so as to cancel the calculation error of the pseudo-distance due to the antenna delay amount D1.

By setting the delay correction amount in this way, the influence of the antenna delay amount included in the calculated pseudo-distance can be suppressed, and the pseudo-distance is accurately calculated.

In addition, in the configuration of the disclosure, the delay correction amount is set for each frequency of the positioning signal. Therefore, even if the frequency of the positioning signal used for calculating the pseudo-distance differs, since the correction is performed based on each frequency, the pseudo-distance is accurately calculated. Specifically, as described above, in the case where the calculation of the pseudo distance and the positioning computation are performed by using GNSS systems with different frequencies, the pseudo-distance and result of the positioning computation can be accurately calculated.

### (First positioning method)

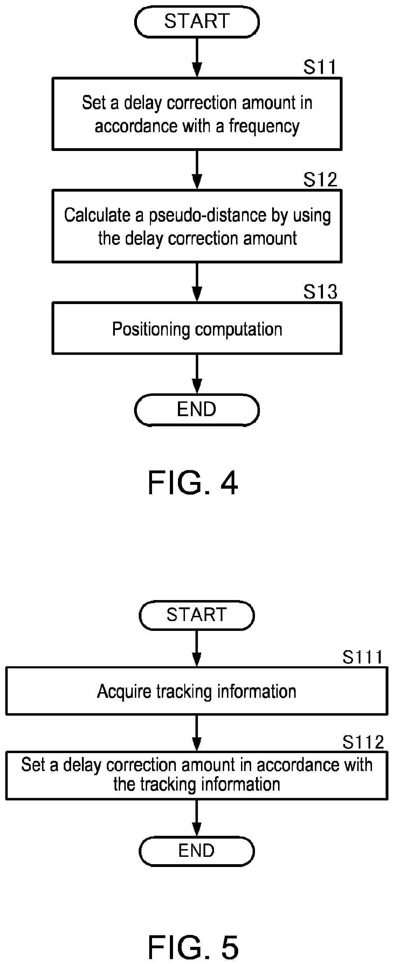

In the above description, a mode in which the pseudo-distance calculation and the positioning computation are respectively realized by individual functional units. However, it is also possible to realize the pseudo-distance calculation and the positioning computation by programming and storing the respective processes of the positioning method and executing by an arithmetic processing device. In such case, flows shown in FIGs. 4 and 5 as described above may be executed. FIG. 4 is a flowchart of a positioning method according to the first embodiment of the disclosure. FIG. 5 is a flowchart of a delay correction amount setting method. Regarding the above-described contents in the specific contents of the respective processes shown in the flowcharts of FIGs. 4 and 5, the description will be omitted.

As shown in FIGs. 4 and 5, the arithmetic processing device sets the delay correction amount in accordance with the frequency (FIG. 4, S11). More specifically, the arithmetic processing device acquires the tracking information (FIG. 5, S111), and, based on the tracking information, sets the delay correction amount for each positioning signal (frequency) (FIG. 5, S112).

The arithmetic processing device calculates the pseudo-distance for each positioning signal (positioning satellite) by using the delay correction amount set for each positioning signal (FIG. 4, S12). The arithmetic processing device performs positioning computation by using the pseudo-distances with respect to multiple positioning satellites (FIG. 4, S13).

By executing such process, the pseudo-distance of each positioning satellite is accurately calculated, and the positioning computation result is also at high accuracy.

### (Second embodiment)

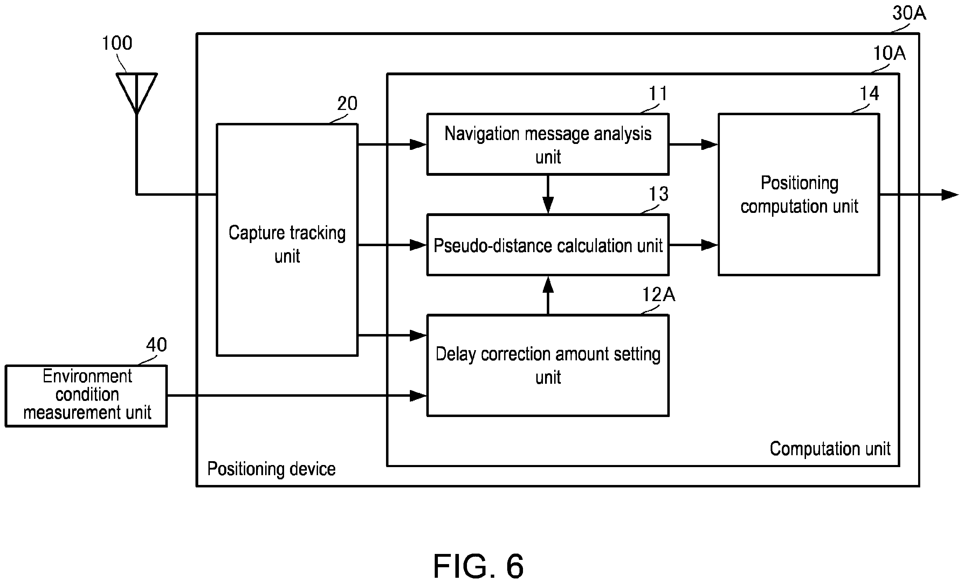

In the following, a positioning technique according to the second embodiment of the disclosure is described with reference to the drawings. FIG. 6 is a functional block diagram of a positioning device according to the second embodiment of the disclosure.

As shown in FIG. 6, compared with the positioning device 30 of the first embodiment, a positioning device 30A according to the second embodiment differs in a delay correction amount setting method in a delay correction amount setting unit 12A of a computation unit 10A. The rest configuration of the positioning device 30A is the same as that of the positioning device 30, and the description of the same portions will be omitted.

The tracking information and an environment condition are input together to the delay correction amount setting unit 12A. The environment condition, for example, is measured by an environment condition measurement unit 40. For example, if the environment condition is the ambient temperature of the antenna 100, the environment condition measurement unit 40 is realized by a temperature sensor able to measure the ambient temperature of the antenna 100.

The delay correction amount setting unit 12A sets the delay correction amount by using the tracking information and the environment information. The delay correction amount setting unit 12A outputs to the pseudo-distance calculation unit 13.

### (Second setting method of the delay correction amount)

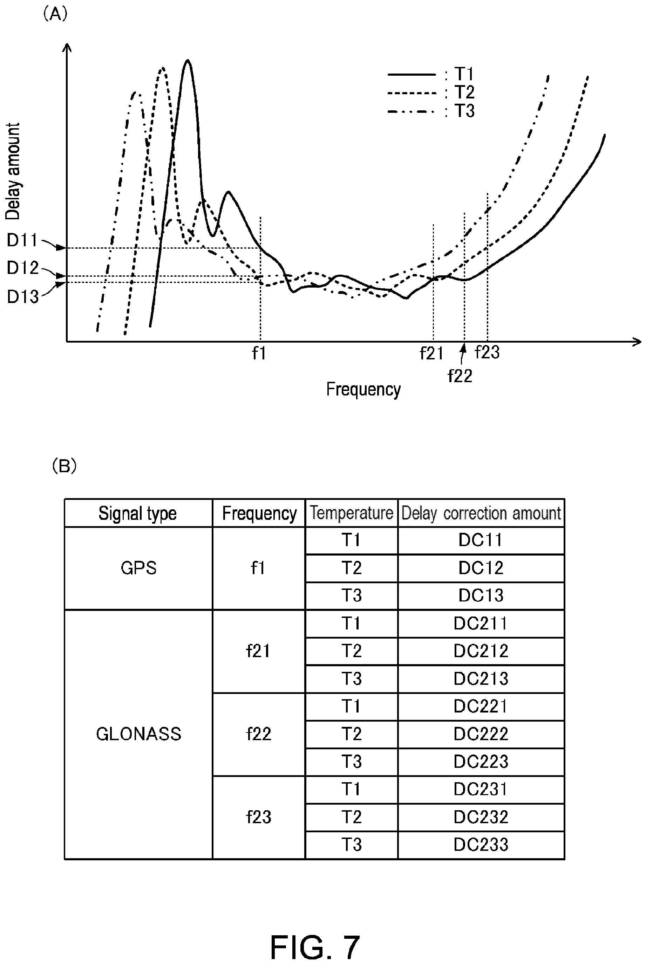

(A) of FIG. 7 is a graph illustrating an example of an antenna delay amount of each positioning signal and each temperature, and (B) of FIG. 7 is a diagram illustrating an example of a delay correction amount setting table.

As shown in (A) of FIG. 7, the antenna delay amount of the positioning signal has a frequency property. In other words, the antenna delay amount of the positioning signal differs as the frequency of the positioning signal differs. In addition, as shown in (A) of FIG. 7, the antenna delay amount of the positioning signal has a temperature property. In other words, the antenna delay amount of the positioning signal differs as the ambient temperature of the antenna 100 differs, even if the frequency of the positioning signal is fixed.

As a specific example, in the case shown in (A) of FIG. 7, regarding the GPS positioning signal (e.g., L1 wave), the antenna delay amount for the frequency f1 and an antenna ambient temperature T1 is an antenna delay amount D11. Regarding the GPS positioning signal, the antenna delay amount for the frequency f1 and an antenna ambient temperature T2 is an antenna delay amount D12. Regarding the GPS positioning signal, the antenna delay amount for the frequency f1 and an antenna ambient temperature T3 is an antenna delay amount D13. It is noted that, for GLONASS, with respect to the frequencies f21, f22, f23, respectively, if the antenna ambient temperatures T1, T2, T3 are different, the antenna delay amounts are not necessarily the same.

The delay correction amount setting unit 12A sets a delay correction amount DC11, a delay correction amount DC12, and a delay correction amount DC13 so as to cancel the calculation errors of the pseudo-distances due to the antenna delay amount D21, the antenna delay amount D12, and the antenna delay amount D13, and the antenna delay amount D23, respectively, based on the combinations of GPS (frequency f1) and the antenna ambient temperatures T1, T2, T3, for example.

Likewise, the delay correction amount setting unit 12A sets a delay correction amount DC211 (frequency f21, antenna ambient temperature T1), a delay correction amount DC212 (frequency f21, antenna ambient temperature T2), and a delay correction amount DC213 (frequency f21, antenna ambient temperature T3), respectively, based on the combinations of GLONASS (frequency f21) and the antenna ambient temperatures T1, T2, T3, for example. The delay correction amount setting unit 12A sets a delay correction amount DC221 (frequency f22, antenna ambient temperature T1), a delay correction amount DC222 (frequency f22, antenna ambient temperature T2), and a delay correction amount DC223 (frequency f22, antenna ambient temperature T3), respectively, based on the combinations of GLONASS (frequency f22) and the antenna ambient temperatures T1, T2, T3, for example. The delay correction amount setting unit 12A sets a delay correction amount DC231 (frequency f23, antenna ambient temperature T1), a delay correction amount DC232 (frequency f23, antenna ambient temperature T2), and a delay correction amount DC233 (frequency f23, antenna ambient temperature T3) based on the combinations of GLONASS (frequency f23) and the antenna ambient temperatures T1, T2, T3, for example.

In this way, by setting the delay correction amount based on the frequency and the environment condition, the influence of the antenna delay amount included in the calculated pseudo-distance can be further suppressed, and the pseudo-distance is more accurately calculated.

In the above description, the temperature is used as an example of the environment condition. However, the above configuration and processing are also applicable to those changing the propagation delays of the positioning signals, such as humidity.

### (Second positioning method)

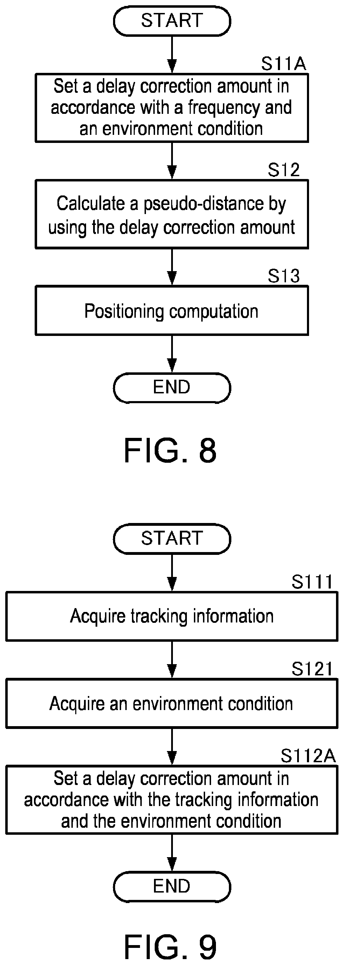

In the above description, a mode in which the pseudo-distance calculation and the positioning computation are respectively realized by individual functional units. However, it is also possible to realize the pseudo-distance calculation and the positioning computation by programming and storing the respective processes of the positioning method and executing by an arithmetic processing device. In such case, flows shown in FIGs. 8 and 9 as described above may be executed. FIG. 8 is a flowchart of a positioning method according to the second embodiment of the disclosure. FIG. 9 is a flowchart of a delay correction amount setting method. Regarding the above-described contents in the specific contents of the respective processes shown in the flowcharts of FIGs. 8 and 9, the description will be omitted.

As shown in FIGs. 8 and 9, the arithmetic processing device sets the delay correction amount in accordance with the frequency and the environment condition (FIG. 8, S11A). More specifically, the arithmetic processing device acquires the tracking information (FIG. 9, S111) and the environment condition (FIG. 9, S121). The arithmetic processing device, based on the tracking information and the environment condition, sets the delay correction amount for each positioning signal (FIG. 9, S112A).

The arithmetic processing device calculates the pseudo-distance for each positioning signal (positioning satellite) by using the delay correction amount set for each positioning signal (FIG. 8, S12). The arithmetic processing device performs positioning computation by using the pseudo-distances with respect to multiple positioning satellites (FIG. 8, S13).

By executing such process, the pseudo-distance of each positioning satellite is even more accurately calculated, and the positioning computation result is also at higher accuracy.

In the above description, a mode of setting the delay correction amount based on the frequency and the environment condition is set. However, if there is a further factor that generates an antenna delay amount, the delay correction amount may be set by also including such factor.

Also, in the above description, the delay correction amount is set simply with respect to the antenna delay amount. However, in the case where an RF amplifier is connected between the antenna 100 and the capture tracking unit 20 as described above, the delay correction amount may also be set by including a delay amount of the RF amplifier.

### Reference Signs List

10, 10A: Computation unit;
11: Navigation message analysis unit;
12, 12A: Delay correction amount setting unit;
13: Pseudo-distance calculation unit;
14: Positioning computation unit;
20: Capture tracking unit;
30: Positioning device;
30A: Positioning device;
40: Environment condition measurement unit;
100: Antenna;
D1, D11, D12, D13, D21, D22, D23: Antenna delay amount;
DC1, DC11, DC12, DC13, DC21, DC211, DC212, DC213, DC22, DC221, DC222, DC223, DC23, DC231, DC232, DC233: Delay correction amount;
f1, f21, f22, f23: Frequency;
T1, T2, T3: Antenna ambient temperature.

## Claims

1. A positioning device, comprising:
a delay correction amount setting unit, setting a delay correction amount with respect to a delay amount from an antenna to the positioning device that occurs in a positioning signal being tracked; and
a pseudo-distance calculation unit, calculating a pseudo-distance by using a result of tracking and the delay correction amount.

2. The positioning device as claimed in claim 1, wherein the delay correction amount setting unit sets the delay correction amount based on a frequency of the positioning signal.

3. The positioning device as claimed in claim 1 or 2, wherein the delay correction amount setting unit sets the delay correction amount based on an environment of the antenna.

4. The positioning device as claimed in claim 3, wherein the delay correction amount setting unit sets the delay correction amount based on a temperature around the antenna as the environment of the antenna.

5. The positioning device as claimed in any one of claims 1 to 4, comprising a navigation message analysis unit, analyzing a navigation message superimposed on the positioning signal,
wherein the navigation message analysis unit acquires a clock error of a positioning satellite as a transmitter of the positioning signal, and outputs the clock error to the pseudo-distance calculation unit, and
the pseudo-distance calculation unit calculates the pseudo-distance by using the clock error.

6. The positioning device as claimed in any one of claims 1 to 5, comprising a positioning computation unit, performing positioning computation by using the pseudo-distance.

7. A positioning method, comprising:
setting a delay correction amount with respect to a delay amount from an antenna to a positioning device that occurs in a positioning signal being tracked; and
calculating a pseudo-distance by using a result of tracking and the delay correction amount.

8. The positioning method as claimed in claim 7, comprising: setting the delay correction amount based on a frequency of the positioning signal.

9. The positioning method as claimed in claim 7 or 8, comprising: setting the delay correction amount based on an environment of the antenna.

10. The positioning method as claimed in claim 9, comprising: setting the delay correction amount based on a temperature around the antenna as the environment of the antenna.

11. The positioning method as claimed in any one of claims 7 to 10, comprising:
analyzing a navigation message superimposed on the positioning signal;
acquiring a clock error of a positioning satellite as a transmitter of the positioning signal; and
calculating the pseudo-distance by using the clock error.

12. The positioning method as claimed in any one of claims 7 to 11, comprising: performing positioning computation by using the pseudo-distance.

13. A positioning program, causing an arithmetic processing device to execute:
setting a delay correction amount with respect to a delay amount from an antenna to a positioning device that occurs in a positioning signal being tracked; and
calculating a pseudo-distance by using a result of tracking and the delay correction amount.

14. The positioning program as claimed in claim 13, causing the arithmetic processing device to execute:
setting the delay correction amount based on a frequency of the positioning signal.

15. The positioning program as claimed in claim 13 or 14, causing the arithmetic processing device to execute:
setting the delay correction amount based on an environment of the antenna.

16. The positioning program as claimed in claim 15, causing the arithmetic processing device to execute:
setting the delay correction amount based on a temperature around the antenna as the environment of the antenna.

17. The positioning program as claimed in any one of claims 13 to 16, causing the arithmetic processing device to execute:
analyzing a navigation message superimposed on the positioning signal;
acquiring a clock error of a positioning satellite as a transmitter of the positioning signal; and
calculating the pseudo-distance by using the clock error.

18. The positioning program as claimed in any one of claims 13 to 17, causing the arithmetic processing device to execute:
performing positioning computation by using the pseudo-distance.
